# EUROPÄISCHE PATENTSCHRIFT

(11) **EP 3 855 259 B1**
(45) Veröffentlichungstag und Bekanntmachung des Hinweises auf die Patenterteilung: **20.07.2022**
(21) Anmeldenummer: 20153061.5
(22) Anmeldetag: 22.01.2020
(51) Int. Cl.: G05B 19/042, G05B 19/05

(54) **VERFAHREN ZUR KOMPATIBILITÄTSPRÜFUNG VON FUNKTIONSMODULEN**
METHOD FOR TESTING COMPATIBILITY OF FUNCTIONAL MODULES
PROCÉDÉ DE VÉRIFICATION DE LA COMPATIBILITÉ DE MODULES FONCTIONNELS

(43) Veröffentlichungstag der Anmeldung: 28.07.2021
(73) Patentinhaber: Siemens Aktiengesellschaft, 80333 München (DE)
(72) Erfinder: Cejka, Stephan, 1210 Wien (AT); Frischenschlager, Albin, 1230 Wien (AT); Gawron-Deutsch, Tobias, 1040 Wien (AT)
(74) Vertreter: Maier, Daniel Oliver

(56) Entgegenhaltungen:
- EP-A1- 3 128 383
- DE-A1-102012 112 842
- DE-A1-102013 108 478
- US-A1- 2004 199 899
- US-A1- 2016 330 082

## Beschreibung

### Technisches Gebiet

Die vorliegende Erfindung betrifft ein Verfahren zur Prüfung einer Kompatibilität von Funktionsmodulen, welche auf Feldgeräten eines Automatisierungssystems mittels einer Zentraleinheit für im Automatisierungssystem auftretende Anwendungsfälle installierbar sind. Die Funktionsmodule werden in einem digitalen Archivsystem zur Verfügung gestellt und sind dort mit Bewertungsdaten versehen. Anhand der jeweils zu den Funktionsmodulen zugehörigen Bewertungsdaten können vom digitalen Archivsystem jene Funktionsmodule für eine Installation auf einem Feldgerät vorgeschlagen werden, welche für einen jeweils vorgebbaren Anwendungsfall einsetzbar sind.

### Stand der Technik

Im industriellen Umfeld werden mittlerweile so genannte Internet-of-Things (IoT)-Konzepte bzw. Industrial Internet-of-Things (IIoT)-Konzepte eingesetzt. Ein wichtiger Aspekt von IIoT ist eine Verbesserung der Effektivität und eine Steigerung der Effizienz durch intelligente industrielle Systeme und flexiblere Produktionstechniken. Mit IIoT können eine Nutzung von Daten, welche von Feldgeräten (z.B. Sensoreinheiten, Messeinheiten, Steuer- und Regeleinheiten, intelligente Zählereinheiten (Smart Meter), etc.) geliefert werden, eine Maschinen-zu-Maschinen-Kommunikation (M2M-Kommunikation) sowie die Effizienz von intelligenten Einheiten und Automaten eines Automatisierungssystems, wie z.B. eines intelligenten Netzmanagementsystems zur Automatisierung eines Niederspannungsnetzes, eines Gebäudeautomatisierungssystems, einer komplexen Industrieanlage, etc. gesteigert werden.

Um die jeweils im Kontext von IIoT-Konzepten auftretenden Anwendungsfälle oder Use-Cases abdecken zu können, werden auf den Einheiten des Automatisierungssystems - vor allem auf Feldgeräten (z.B. Sensoreinheiten, Messeinheiten, Steuereinheiten, Regeleinheiten, etc.) Funktionsmodule - d.h. Anwendungen oder Applikationen - installiert. Die installierten Funktionsmodule bzw. Applikationen erledigen häufig nur jeweils sehr kleine, abgegrenzte Aufgaben und arbeiten mit anderen Funktionsmodulen bzw. Applikationen zusammen, welche auf demselben Feldgerät oder weiteren Feldgeräten/Einheiten des Automatisierungssystems installiert sind, um die jeweiligen Anwendungsfälle abdecken zu können. Es ist daher üblicherweise vorgesehen, dass auf einem Feldgerät oder einer Einheit des Automatisierungssystems eine Vielzahl von Funktionsmodulen installiert sind und parallel ablaufen. Dabei wird von den Funktionsmodulen auf begrenzte Ressourcen (z.B. Speicherplatz, Prozessorleistung, etc.) zugegriffen und diese mit anderen Funktionsmodulen geteilt. Daher können ressourcenabhängige Kompatibilitätsprobleme auftreten, welche während einer Entwicklung der jeweiligen Applikationen nicht berücksichtigt wurden - wie beispielsweise eine überhöhte Last eines Prozessors, die Summe des von den Funktionsmodulen benötigten Speichers übersteigt jenen Speicher, welcher vom Feldgerät bzw. von der jeweiligen Automatisierungseinheit zur Verfügung gestellt wird, etc.

In einem heterogenen System - wie z.B. einem Automatisierungssystem mit vorgebbaren Anwendungsfällen im IIoT-Kontext oder bei einer Automatisierung eines Niederspannungsnetzes mit einer bekannten Anzahl an Hardware-Einheiten und verschiedenen Funktionsmodulen sowie einer bekannten Anzahl an auftretenden Anwendungsfällen - können neu installierte Funktionsmodule bzw. Applikationen unerwartet zu Beeinflussung und/oder fehlerhafter Funktion bereits installierter Funktionsmodule führen. Es muss daher ein Augenmerk daraufgelegt werden, welche Applikationen bzw. Funktionsmodule und/oder Kombinationen von Applikationen gemeinsam auf einer Automatisierungseinheit bzw. einem Feldgerät installiert werden können bzw. eine Kompatibilität der jeweiligen Funktionsmodule geprüft werden. Neben ressourcenabhängigen Problemen (z.B. überhöhte Prozessorlast, zu wenig Speicher, etc.) können auch anwendungsfallspezifische Inkompatibilitäten auftreten (z.B. von zwei Funktionsmodule zur Regelung in einer Ortsnetzstation werden inkompatible Entscheidungen getroffen, etc.), welche bei einer Installation der Funktionsmodule bzw. der Applikationen berücksichtigt werden sollten.

Die Installation der jeweiligen Funktionsmodule bzw. Applikationen kann beispielsweise manuell direkt lokal am Feldgerät bzw. auf der Automatisierungseinheit erfolgen. Eine derartige Vorgehensweise ist allerdings bei einer großen Anzahl an Feldgeräten bzw. Automatisierungseinheiten, wie sie beispielsweise bei komplexem Industrieanalagen, in der Gebäudeautomatisierung oder bei der Automatisierung eines Niederspannungsnetzes vorkommen kann, nicht praktikabel. Bei einer hohen Anzahl an Feldgeräten erfolgt die Installation der Funktionsmodule meist von einer zentralen Stelle bzw. mittels eines zentralen Operators remote und automatisiert. D.h. die automatisierte Installation wird von einer Zentraleinheit organisiert, wie z.B. von einem zentralen System und an einer zentralen Stelle von einem zentralen Operator remote gestartet.

Für eine Entscheidung, welche neuen Funktionsmodule bzw. Applikationen installiert werden sollen, können beispielsweise so genannte Empfehlungsdienste oder Recommender Systems eingesetzt werden. Derartige Recommender Systems kommen heutzutage z.B. immer dann zum Einsatz, wenn aus einer großen Menge an Objekten (z.B. Produkte, Musikstücken, Filmen, Applikationen, etc.) einem Benutzer eine kleine Teilmenge empfohlen werden soll. Dabei geht es meist darum, dem Benutzer das Entdecken für ihn interessanter Objekte zu erleichtern. Anwendung finden derartige Recommender Systems beispielsweise bei Internet-Vertriebsplattformen, wie z.B. Webshops (z.B. Amazon Store, etc.) oder so genannten Applikationsstores (z.B. Google Play Store für Android-Apps, App Store für Apple-Apps, etc.). Zur Bewertung der Objekte bzw. Anwendungen werden beispielsweise Nutzerempfehlungen, Kaufhäufigkeit eines ähnlichen Objekts, Beliebtheit eines Objektes im Sinne von "Nutzer, die Objekt X kauften, kauften auch Objekt Y und/oder Z", etc.) herangezogen. Ein derartiges Recommender System für e-commerce-Produkt wird beispielsweise in der Schrift WO 2017/095371 beschrieben.

Im Zusammenhang mit IIoT-Anwendungen in komplexen Automatisierungssystemen können beispielsweise Systeme eingesetzt werden, um Applikationen remote von einem zentralen Operator mittels einer Zentraleinheit zu installieren. Eine Menge an für die jeweils vorgegebenen Anwendungsfälle bzw. Problemstellungen verfügbaren Funktionsmodulen kann z.B. von einer zentralen Ablagestelle bzw. in einem zentralen, digitalen Archivsystem bzw. Repository zur Verfügung gestellt werden, wobei das zentrale, digitale Archivsystem beispielsweise von einem vertrauenswürdigen Dritten (z.B. Equipmenthersteller, Gerätebetreiber, etc.) verwaltet werden kann. Dabei sind in dem digitalen Archivsystem beispielsweise die möglichen, auftretenden Problemstellungen in einer Ontologie definiert sowie Applikationen hinterlegt, welche für die jeweiligen Problemstellungen bzw. im jeweiligen Anwendungsfall einsetzbar sind. Ontologien sind in der Informatik sprachlich gefasste und formal geordnete Darstellungen einer Menge von Begrifflichkeiten und der zwischen ihnen bestehenden Beziehungen in einem bestimmten Gegenstandsbereich. Sie werden dazu genutzt, "Wissen" in digitalisierter und formaler Form zwischen Anwendungsprogrammen und Diensten auszutauschen. Wissen umfasst dabei sowohl Allgemeinwissen als auch Wissen über sehr spezielle Themengebiete und Vorgänge.

Im IIoT-Kontext können allerdings für die Lösung einer definierten Problemstellung bzw. für den jeweils vorgegebenen Anwendungsfall im digitalen Archivsystem mehrere Funktionsmodule bzw. Applikationen zur Verfügung stehen. Diesen Funktionsmodulen können beispielsweise unterschiedliche Bewertungsdaten für die Lösung der jeweiligen Problemstellung zugewiesen sein. Es sind allerdings auch andere und/oder zusätzliche Bewertungen der Funktionsmodule bzw. Applikationen denkbar - analog einem so genannten Recommender System von Internet-Vertriebsplattformen, Webshops oder Applikationsstores, wie z.B. Ratings nach Beliebtheit, Kauf-/Einsatzhäufigkeit, etc. Diese Bewertungsdaten können dann in eine Entscheidung einfließen, welches Funktionsmodul bzw. welche Applikation auf dem Feldgeräten installiert werden soll. Allerdings wird bei den Bewertungsdaten, welche den Applikationen zugeordnet sind, nicht berücksichtigt, ob bestimmte Kombinationen von Funktionsmodulen und/oder bei einer bestimmten Hardware-Architekturen (Prozessor-/CPU-Typ, Speichergröße, Speichereinheit, etc.) des jeweiligen Feldgeräts potenziell Probleme und/oder Fehlfunktionen, vor allem während des laufenden Betriebs des Automatisierungssystems bzw. bei der Ausführung des neu installierten Funktionsmoduls auftreten können. D.h. von den zu den Funktionsmodulen zugeordneten Bewertungsdaten wird üblicherweise nicht berücksichtigt, ob ein Funktionsmodul, welches für einen in einem Automatisierungssystem auftretenden Anwendungsfall bzw. Problemstellung vorgeschlagen wird, mit installierten Funktionsmodulen bereits öfters zu Fehlfunktionen, Fehlern, Störungen, Ausfällen, etc. während des Betriebs des Automatisierungssystems geführt hat.

EP3128383 zeigt, in Abhängigkeit von Kompatibilitätsinformationen, die Freigabe einer Teilmenge der Funktionsmodulen eines Feldgerätes. Dabei wird ein Verhalten des Feldgeräts erzeugt, das an die Kompatibilitätsinformationen angepasst ist.

### Darstellung der Erfindung

Der Erfindung liegt daher die Aufgabe zugrunde, ein Verfahren zur Prüfung einer Kompatibilität von auf Feldgeräten installierbaren Funktionsmodulen anzugeben, durch welches auf einfache Weise potenziell problematische Kombinationen von Funktionsmodulen bereits vor einer Installation auf einem Feldgerät erkannt werden können.

Diese Aufgabe wird durch ein Verfahren der eingangs genannten Art mit den Merkmalen gemäß dem unabhängigen Patentanspruch gelöst. Vorteilhafte Ausführungsformen der vorliegenden Erfindung sind in den abhängigen Ansprüchen beschrieben. Erfindungsgemäß erfolgt die Lösung der Aufgabe durch ein Verfahren, bei welchem Funktionsmodule für in einem Automatisierungssystem auftretende bzw. für vorgegebene Anwendungsfälle und/oder Problemstellungen von einem digitalen Archivsystem zur Verfügung gestellt werden. Diese Funktionsmodule sind mittels einer Zentraleinheit des Automatisierungssystems auf den Feldgeräten des Automatisierungssystems für einen jeweiligen Anwendungsfall installierbar. Im digitalen Archivsystem sind den Funktionsmodulen Bewertungsdaten zugeordnet, auf deren Basis die jeweils für einen vorgegebenen Anwendungsfall bzw. eine vorgegebene Problemstellung im Automatisierungssystem verwendbaren Funktionsmodule vom digitalen Archivsystem für eine Installation auf einem oder mehreren Feldgeräten des Automatisierungssystems vorgeschlagen werden. Von der Zentraleinheit des Automatisierungssystems bzw. auf Seiten des Betreibers des Automatisierungssystems wird neben dem vorgegebenen Anwendungsfall bzw. der vorgegebenen Problemstellung eine Dateninformation über die Funktionsmodule, welche auf dem Feldgerät bzw. auf den Feldgeräten des Automatisierungssystems installiert sind, an das digitale Archivsystem übermittelt. Vom digitalen Archivsystem werden dann auf Basis der Dateninformation Funktionsmodulkombinationen aus den auf dem Feldgerät installierten Funktionsmodulen und zumindest einem der für den jeweiligen Anwendungsfall vorgeschlagenen Funktionsmodule ermittelt. Für die ermittelten Funktionsmodulkombinationen wird dann vom digitalen Archivsystem auf Basis einer gespeicherten Nutzungsstatistik eine Fehlerhäufigkeit der jeweils ermittelten Funktionsmodulkombination abgeschätzt. Für die Installation auf dem Feldgerät bzw. auf den Feldgeräten des Automatisierungssystems wird dann zumindest jenes für den vorgegebenen Anwendungsfall bzw. die vorgegebene Problemstellung installierbare Funktionsmodul vorgeschlagen, welches in Kombination mit den Funktionsmodulen, welche am Feldgerät bereits installiert sind, die niedrigste abgeschätzte Fehlerhäufigkeit oder eine sehr hohe Wahrscheinlichkeit keiner Fehlfunktion aufweist.

Der Hauptaspekt der gegenständlichen Erfindung besteht darin, dass bereits vor oder bei der Installation von neuen Funktionsmodule potenziell problematische Funktionsmodulkombinationen erkannt werden können. D.h. es werden auf Basis gespeicherter Nutzungsstatistiken von Funktionsmodulen bzw. Funktionsmodulkombinationen, welche z.B. zu einem frühen Zeitpunkt auf Feldgeräten in Automatisierungssystem installiert wurden, problematische Funktionsmodulkombinationen identifiziert. Es können damit auf einfache Weise Funktionsmodulkombinationen erkannt werden, welche z.B. verfügbare Ressourcen überschreiten (z.B. Überlastung des Prozessors des jeweiligen Feldgeräts, verfügbarer Speicherplatz am Feldgerät wird überschritten, etc.) oder zu anwendungsfallspezifischen Problemen und/oder Fehlfunktionen (z.B. inkompatible Operationen von unterschiedlichen Funktionsmodulen, etc.) führen können. Damit wird weiterhin ein Ausrollen bzw. Installieren von einem oder mehreren Funktionsmodulen auf einer Vielzahl von Feldgeräten in einem Automatisierungssystem verhindert, welches oder welche in Kombination mit bereits installierten Funktionsmodulen zu Fehlermeldungen, Fehlfunktionen und/oder Ausfällen von Feldgeräten und/oder Störungen im Automatisierungssystem führen können.

Es ist weiterhin vorteilhaft, wenn vom digitalen Archivsystem die für die ermittelten Funktionsmodulkombinationen abgeschätzten Fehlerhäufigkeiten sowie auf Basis der gespeicherten Nutzungsstatistik ermittelte Fehlfunktion ausgegeben und angezeigt werden. So kann z.B. über eine Ausgabeeinheit der Zentraleinheit des Automatisierungssystem einem Betreiber des Automatisierungssystem neben einer Bewertung von Funktionsmodulen auch angezeigt werden, ob das zumindest eine für einen vorgegebenen Anwendungsfall vorgeschlagene oder ausgewählte Funktionsmodul mit einer hohen Wahrscheinlichkeit zu Störungen im Automatisierungssystem führen kann oder nicht. D.h. dem Betreiber können beispielsweise beim geplanten Ausrollen eines Funktionsmoduls angezeigt werden, welche Funktionsmodul- bzw. Applikationskombinationen problematisch sein könnten.

Es ist günstig, wenn die Dateninformation über die Funktionsmodule, welche auf dem Feldgerät des Automatisierungssystems installiert sind, in Form eines Hashwertes an das digitale Archivsystem übermittelt wird. Auf diese einfache Weise wird vom Betreiber des Automatisierungssystem die konkret am jeweiligen Feldgerät installierte Kombination von Funktionsmodulen bzw. Applikationen nicht bekannt gegeben. Von der Zentraleinheit des Automatisierungssystems des Betreibers wird an das digitale Archivsystem, welches z.B. von einem vertrauenswürdigen Dritten (z.B. Equipmenthersteller, Gerätebetreiber, etc.) verwaltet werden kann, beispielsweise nur der jeweilige Anwendungsfall bzw. die jeweilige zu lösende Problemstellung sowie die Dateninformation der installierten Funktionsmodule als Hashwert übermittelt.

Zum Berechnen des Hashwertes der Dateninformation der Funktionsmodule, welche auf dem Feldgerät des Automatisierungssystems installiert sind, kann idealerweise eine Hashfunktion verwendet werden, welche derart gestaltet ist, dass mit Hilfe von bekannten Hashwerten ein neuer Hashwert berechnet werden kann. Eine derartige Hashfunktion stellt beispielsweise die so genannte homomorphische Hashfunktion dar. Diese Eigenschaft ermöglicht es im digitalen Archivsystem mit dem von der Zentraleinheit übermittelten Hashwert der installierten Funktionsmodule und den im digitalen Archivsystem bekannten Hashwerten der Funktionsmodule, welche für den vorgegebenen Anwendungsfall bzw. die zu lösende, vorgegebenen Problemstellung vorgeschlagen wurden, auf einfache Weise Hashwerte für die jeweiligen Funktionsmodulkombinationen aus den auf den Feldgeräten installierten Funktionsmodulen und den jeweiligen vorgeschlagenen Funktionsmodulen zu errechnen.

Ein vorteilhafte Ausführungsvariante des erfindungsgemäßen Verfahrens sieht vor, dass für die Nutzungsstatistik Nutzungs- und Fehlfunktionsdaten von Funktionsmodulen und Funktionsmodulkombinationen, welche auf Feldgeräten in verschiedenen Automatisierungssystem installiert sind, als Metriken auf dem Feldgeräten und/oder in der Zentraleinheit des jeweiligen Automatisierungssystems gesammelt werden. Anhand der gesammelten Metriken können unerwünschte Effekte und Probleme, welche manche Kombinationen von Funktionen bzw. Applikationen im laufenden Betrieb eines Automatisierungssystems nach sich ziehen, wie z.B. gegenseitige Beeinflussung von Applikationen, Ressourcenmangel, etc., auf einfache Weise dokumentiert und erkannt werden. Als Quelle für die Nutzungsdaten bzw. Metriken können beispielsweise Fehlermeldungen von Funktionsmodulen und/oder Feldgeräten und Ausfallstatistiken herangezogen werden, welche z.B. auf der Zentraleinheit des Automatisierungssystems ermittelt werden. Weiterhin können für die Metriken so genannte Watchdogs, von denen bestimmte Verhaltensmuster des Feldgeräts bzw. der Applikation als problematisch gemeldet werden, verwendet werden.

Die für das jeweilige Automatisierungssystem gesammelten Metriken werden für einen Aufbau der Nutzungsstatistik in vorteilhafter Weise von den jeweiligen Automatisierungssystemen anonymisiert an das digitale Archivsystem übertragen und von diesem ausgewertet. Das weist den Vorteil auf, dass eine hohe Anzahl an installierten Funktionsmodulkombinationen gesammelt und ausgewertet werden können. Es kann damit sehr einfach erkannt werden, welche Funktionsmodulkombinationen gehäuft zu bestimmten Problemen führen. Im digitalen Archivsystem kann damit einen Nutzungsstatistik für Funktionsmodule und Kombinationen von Funktionsmodulen über eine große Anzahl an Systemen und das Auftreten von Problemen geführt werden. Die Metrik, welche zu diesem Zweck auf den Geräten gesammelt und anonymisiert an das digitale Archivsystem übertragen werden, stellt üblicherweise eine (meist mathematische) Funktion dar, welche eine Eigenschaft von Software in einem Zahlenwert abbildet. Damit wird eine formale Vergleichs- und Bewertungsmöglichkeit geschafft, um beispielsweise Nutzungsdaten (z.B. Fehlermeldungen, Ausfallsstatistiken, etc.) unterschiedlicher Automatisierungssysteme bzw. von Automatisierungssystemen unterschiedlicher Betreiber auf einfache Weise vergleichen und auswerten zu können.

Es ist weiterhin von Vorteil, wenn die Nutzungsstatistik im digitalen Archivsystem oder in einer Datenbank, welche dem digitalen Archivsystem zugeordnet ist, gespeichert wird. Damit kann auf einfache Weise und rasch auf gesammelte Nutzungsdaten zu Funktionsmodulen bzw. Funktionsmodulkombinationen im digitalen Archivsystem zugegriffen werden. Für jede Abfrage durch einen Betreiber eines Automatisierungssystems z.B. über die jeweilige Zentraleinheit des jeweiligen Automatisierungssystems, ob für einen vorgegebenen Anwendungsfall bzw. eine vorgegebene Problemstellung vorgeschlagene Funktionsmodule in Kombination mit installierten Funktionsmodulen möglicherweise zu Problemen und/oder Fehlfunktionen führen, kann damit eine Abschätzung einer möglichen Fehlerhäufigkeit auf Basis von einer großen Anzahl an historischen Nutzungsdaten geliefert werden.

Idealerweise umfasst die gespeicherte Nutzungsstatik neben Funktionsmodulkombinationen, zumindest eine Anzahl der Installationen der jeweiligen Funktionsmodulkombinationen auf Feldgeräten sowie eine Anzahl an Installationen der jeweiligen Funktionsmodulkombinationen, durch welche eine Fehlfunktion verursacht wurden. Diese Daten können beispielsweise bei einer Abfrage des digitalen Archivsystems für eine Abschätzung einer Fehlerhäufigkeit einer ermittelten Funktionsmodulkombination genutzt werden. Alternativ oder zusätzlich können dem Betreiber für den jeweiligen vorgegebenen Anwendungsfall auch die ermittelten Funktionsmodulkombinationen gemeinsam mit der aus der Nutzungsstatistik ermittelten Anzahl an Installationen, der aus der Nutzungsstatistik ermittelten Anzahl an Fehlfunktionen der jeweiligen Funktionsmodulkombinationen sowie der aufgetretenen Fehlfunktionen (z.B. zu geringer, verfügbarer Speicherplatz, zu hohe Prozessorauslastung, gegenseitige Beeinflussung von Funktionsmodulen, etc.) angezeigt werden.

### Kurzbeschreibung der Zeichnung

Die Erfindung wird nachfolgend in beispielhafter Weise anhand der beigefügten Figuren erläutert. Dabei zeigen:
- Figur 1: schematisch eine beispielhafte Systemarchitektur zur Durchführung des erfindungsgemäßen Verfahrens zur Kompatibilitätsprüfung von auf Feldgeräten instal-lierbaren Funktionsmodulen
- Figur 2: schematisch einen beispielhaften Ablauf des erfindungsgemäßen Verfahrens zur Kompatibilitätsprüfung von auf Feldgeräten installierbaren Funktionsmodulen

### Ausführung der Erfindung

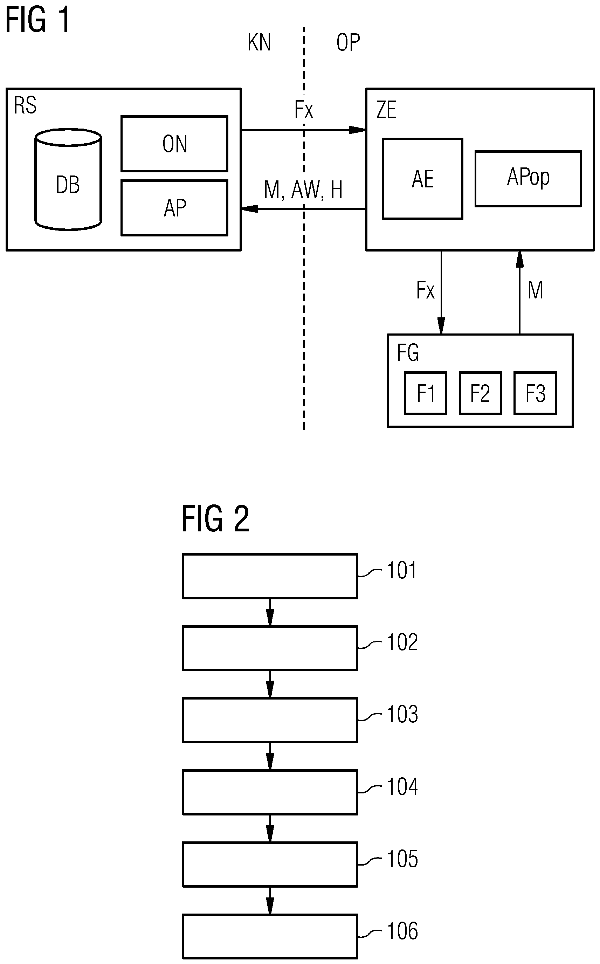

Figur 1 zeigt in schematischer Weise eine beispielhafte Systemarchitektur zur Durchführung des Verfahrens zur Kompatibilitätsprüfung von Funktionsmodulen Fx, welche auf Feldgeräten FG eines Automatisierungssystems installierbar sind. Ein derartiges Automatisierungssystem kann beispielsweise ein intelligentes System zur Automatisierung eines Niederspannungsnetze, ein Gebäudeautomatisierungssystem oder eine komplexe Industrieanlage, etc. für eine Umsetzung von IIoT-Konzepten sein. Das Automatisierungssystem umfasst üblicherweise eine beschränkte bzw. bekannte Anzahl an Hardwareeinheiten bzw. Feldgeräten FG auf. Derartige Feldgeräte FG können z.B. Mess- und/oder Sensoreinheiten (z.B. intelligente Zähler (Smart Meter), Spannungs- und/oder Strommesseinheiten, Temperatursensoren, etc.), Regel- und Steuereinheiten (z.B. Spannungsregler, Einheiten zum Auslösen von Aktoren, etc.), etc. sein.

Auf den Feldgeräten FG bzw. Hardwareeinheiten FG des Automatisierungssystems können Funktionsmodule F1, F2, F3 installiert sein, um für vorgegebene Anwendungsfälle AW bzw. vorgegebene Problemstellungen AW im Automatisierungssystem Funktionalitäten zur Verfügung zu stellen. Diese Funktionalitäten können beispielsweise Aufzeichnungen von Betriebs- und Messdaten (z.B. Spannungs-/Strommesswerte, Leistungsmessdaten von an das Energieversorgungsnetz angeschlossenen Endverbrauchern, etc.) für spätere Analysezwecke oder für weiterführende Berechnungen sowie Regel- und Steuerfunktionen für einen weitestgehend automatisierten Betrieb des Automatisierungssystems zur Verfügung gestellt werden.

Weiterhin können auf den Feldgeräten im laufenden Betrieb des Automatisierungssystems FG Metriken M gesammelt werden, welche aufgrund der installierten Funktionsmodule F1, F2, F3 bzw. deren Kombinationen auftretende Probleme, Fehlfunktionen und/oder unerwünschte Effekt (z.B. überhöhte Prozessorauslastung, Überschreiten der verfügbaren Speicherkapazitäten, gegenseitige Beeinflussung von Funktionsmodulen F1, F2, F3, etc.) aufzeichnen. Als Quelle für die gesammelten Metriken M können beispielsweise Fehlermeldungen, Informationen von so genannten Watchdogs, welche z.B. bestimmte Verhaltensmuster eines Feldgeräts FG und/oder eines installierten Funktionsmoduls F1, F2, F3 als Problem melden, etc. verwendet werden.

Die gesammelten Metriken M können bei einem Betreiber OP des Automatisierungssystems an einen Zentraleinheit ZE (z.B. Backend-Einheit) übertragen werden. Auf der Zentraleinheit ZE können beispielsweise auch Ausfallstatistiken von Feldgeräten FG, Funktionsmodulen F1, F2, F3 und/oder deren Kombinationen, etc. für die Metriken M herangezogen werden. Die Zentraleinheit ZE kann beispielsweise ein lokales, digitales Archiv APop umfassen, welche für eine Verwaltung der für die Anwendungsfälle AW des Automatisierungssystems auf den Feldgeräten FG installierten Funktionsmodule F1, F2, F3 eingesetzt wird. Weiterhin kann die Zentraleinheit ZE eine Anzeige- und Ausgabeeinheit AE für z.B. Betreibereingaben und eine Ausgabe von Informationen und Daten über und von Feldgeräten FG und Funktionsmodulen F1, F2, F3 umfassen. Weiterhin können mittels der Zentraleinheit ZE neue Funktionsmodule Fx für vorgegebenen Anwendungsfälle AW bzw. auftretende Problemstellungen AW auf den Feldgeräten FG des Automatisierungssystems z.B. remote ausgerollt und installiert werden.

Für vorgegebene Anwendungsfälle AW oder Problemstellungen AW auf Feldgeräten FG installierbare Funktionsmodule Fx können beispielsweise in einem digitalen Archivsystem RS, welche z.B. von einem vertrauenswürdigen Dritten (z.B. Equipmenthersteller, Gerätebetreiber, etc.) betrieben werden können. Das digitale Archivsystem kann beispielsweise über Kommunikationsnetz KN (z.B. Internet) mit Hilfe der Zentraleinheit ZE vom Betreiber OP des Automatisierungssystem abgefragt werden. D.h. es können vom digitalen Archivsystem RS auf Basis von Ontologie ON für vorgegebene Anwendungsfälle AW bzw. Problemstellungen AW des Automatisierungssystems neu zu installierende Funktionsmodule Fx empfohlen werden, um im vorgegebenen Anwendungsfall AW bzw. für die vorgegebene Problemstellung AW im Automatisierungssystem eingesetzt zu werden. Die installierbaren Funktionsmodule Fx können z.B. in einem digitalen Funktionsmodul-Archiv AP bzw. in einem Applikationsrepository AP abgelegt sein.

Das digitale Archivsystem RS kann beispielweise in Form eines Recommender Systems ausgeführt sein. D.h. den Funktionsmodule sind im digitalen Archivsystem RS Bewertungsdaten - so genannte Ratings - zugeordnet. Die Bewertungsdaten können für den Empfehlungsprozess herangezogen werden, wenn im digitalen Archiv AP des digitalen Archivsystems RS für einen den vorgegebenen Anwendungsfall AW bzw. eine vorgegebene Problemstellung AW mehrere installierbare Funktionsmodule Fx zur Verfügung stehen. Die entsprechenden Funktionsmodule Fx können dann vom digitalen Archivsystem RS z.B. über das Kommunikationsnetz KN auf die Zentraleinheit ZE des Automatisierungssystem für eine remote Installation auf den jeweiligen Feldgeräten FG des Automatisierungssystems geladen.

Weiterhin umfasst das digitale Archivsystem RS eine Datenbank DB, in welcher eine Nutzungsstatistik der Funktionsmodulen F1, F2, F3, Fx gespeichert ist. Alternativ kann die Nutzungsstatistik auch direkt im digitalen Archivsystem RS oder in einer dem digitalen Archivsystem RS zugeordneten Datenbank DB gespeichert sein. Diese gespeicherte Nutzungsstatistik kann neben Funktionsmodulkombinationen, welche z.B. auf Automatisierungssystemen zum Einsatz kommen, zumindest eine Anzahl der Installationen der jeweiligen Funktionsmodulkombinationen sowie eine Anzahl an Installationen der jeweiligen Funktionsmodulkombinationen umfassen, bei welchen die jeweilige Funktionsmodulkombination eine Fehlfunktion verursacht hat. Weiterhin kann auch die jeweilige Fehlfunktion - z.B. Überschreiten verfügbarer Ressourcen (z.B. verfügbarer Speicher, Prozessorlast, etc.), anwendungsfall-spezifische Fehlfunktion (z.B. widersprüchliche Operationen, etc.), welche von der jeweiligen Funktionsmodulkombination im laufenden Betrieb bzw. im spezifischen Anwendungsfall AW verursacht wurde, in der Nutzungsstatistik hinterlegt sein.

Zum Aufbau der gespeicherten Nutzungsstatistik werden die Metriken M genutzt, welche beispielsweise in Automatisierungssystemen von einer Vielzahl an Feldgeräten FG gesammelt wurden. Diese Metriken M können beispielsweise vom jeweiligen Betreiber OP des Automatisierungssystems anonymisiert über das Kommunikationsnetz KN an das digitale Archivsystem RS übertragen und von diesem ausgewertet werden. Damit kann die Nutzungsstatistik genutzt werden, um bei bestimmten Kombinationen von Funktionsmodulen F1, F2, F3, Fx potenzielle Probleme und Fehlfunktionen zu erkennen.

Für einen Ablauf des erfindungsgemäßen Verfahrens zur Kompatibilitätsprüfung von neu zu installierenden Funktionsmodulen Fx, welcher in der Folge anhand der Figur 2 beispielhaft erläutert wird, wird vom der Zentraleinheit ZE weiterhin eine Dateninformation H bereits auf den Feldgeräten FG installierte Funktionsmodule F1, F2, F3 bzw. deren Kombinationen an das digitale Archivsystem RS übertragen. Dabei kann die Dateninformation H über die bereits installierten Funktionsmodule F1, F2, F3 in Form eines Hashwertes H an das digitale Archivsystem RS weitergeleitet werden.

In Figur 2 ist schematisch ein beispielhafter Ablauf des Verfahrens zur Kompatibilitätsprüfung von Funktionsmodulen Fx dargestellt, welche von einem digitalen Archivsystem RS zur Verfügung gestellt werden und welche auf Feldgeräten FG eines Automatisierungssystems für vorgegebenen Anwendungsfälle AW installierbar sind.

In einem Abfrageschritt 101 wird von der Zentraleinheit ZE des Betreibers OP des Automatisierungssystems für einen vorgegebenen Anwendungsfall AW und/oder eine vorgegebene bzw. im Automatisierungssystem auftretende Problemstellung AW das digitale Archivsystem RS z.B. über ein Kommunikationsnetz KN (z.B. Internet, etc.) abgefragt. Dabei wird von der Zentraleinheit ZE der vorgegebenen Anwendungsfall AW an das digitale Archivsystem RS gesendet.

In einem Auswahlschritt 102 werden vom digitalen Archivsystem RS für den vorgegebenen Anwendungsfall AW anhand der Ontologie ON aus dem digitalen Funktionsmodularchiv AP bzw. aus dem Applikationsrepository AP ermittelt. Dem Betreiber OP des Automatisierungssystems werden dann anhand von Bewertungsdaten, welche den Funktionsmodulen Fx im digitalen Archivsystem RS zugeordnet sind, auf Feldgeräten FG des Automatisierungssystems installierbare Funktionsmodule Fx für den vorgegebene Anwendungsfall AW zur Installation vorgeschlagen.

Neben dem vorgegebenen Anwendungsfall AW wurde von der Zentraleinheit ZE im Abfrageschritt 101 eine Dateninformation H an das digitale Archivsystem RS übermittelt. Die Dateninformation H liefert Informationen über auf einem einzelnen Feldgerät FG lokal installierte Funktionsmodule F1, F2, F3 bzw. deren Kombination. Die Dateninformation H kann beispielsweise in Form eines Hashwertes H an das digitale Archivsystem RS übermittelt werden, wobei der Hashwert H von der Zentraleinheit ZE mittels einer Hashfunktion berechnet wird. Die Hashfunktion ist dabei derart ausgestaltet, dass mit Hilfe von bekannten Hashwerten ein neuer Hashwert berechnet werden kann.

In einem Ermittlungsschritt 103 wird vom digitalen Archivsystem RS auf Basis der Dateninformation H über die auf dem Feldgerät FG installierten Funktionsmodule F1, F2, F3 und zumindest einem der jeweils vorgeschlagenen Funktionsmodule Fx die entsprechenden Funktionsmodulkombinationen ermittelt. Dazu können z.B. vom digitalen Archivsystem RS mit dem als Dateninformation H übermittelten Hashwert H der am Feldgerät FG lokal installierten Funktionsmodule F1, F2, F3 bzw. Funktionsmodulkombination und den bekannten Hashwerten der jeweils vorgeschlagenen Funktionsmodule Fx Hashwerte für die jeweiligen Funktionsmodulkombinationen aus den installierten Funktionsmodulen F1, F2, F3 und zumindest einem vorgeschlagenen Funktionsmodule Fx berechnet werden.

In einem Abschätzungsschritt 104 wird dann vom digitalen Archivsystem RS für die jeweilige im Ermittlungsschritt 103 ermittelte Funktionsmodulkombination auf Basis einer Nutzungsstatistik eine Fehlerhäufigkeit der jeweiligen Funktionsmodulkombination abgeschätzt. Die Nutzungsstatistik kann beispielsweise im digitalen Archivsystem RS direkt, in einer in das Archivsystem RS integrierten Datenbank DB oder in einer dem Archivsystem RS zugeordneten Datenbank DB abgespeichert sein. In der gespeicherten Nutzungsstatistik können beispielsweise Funktionsmodulkombinationen - z.B. als Hashwert, die Anzahl, wie oft die jeweilige Funktionsmodulkombination installiert wurde, die Anzahl, wie oft die jeweilige Funktionsmodulkombination zu Problemen bzw. Fehlfunktionen geführt hat, und gegebenenfalls die aufgetretenen Probleme bzw. Fehlfunktionen (z.B. überhöhte Prozessorlast, überhöhter Speicherbedarf, inkompatible Operationen/Anweisungen von Funktionsmodulen F1, F2, F3, etc.) oder dass keine Fehlfunktion bei einer Funktionsmodulkombination aufgetreten ist, abgelegt sein.

Für die Abschätzung der Fehlhäufigkeit einer ermittelten Funktionsmodulkombination kann vom digitalen Archivsystem RS der im Ermittlungsschritt 103 berechnete Hashwert der ermittelten Funktionsmodulkombination verwendet werden. Mittels des Hashwertes wird z.B. die ermittelte Funktionsmodulkombination in der Nutzungsstatistik bzw. in der Datenbank DB gesucht und dann aus der Nutzungsstatistik eine zugehörige Anzahl der Installationen, eine zugehörige Anzahl an Installationen der Funktionsmodulkombination, bei welchen Probleme bzw. Fehlfunktionen aufgetreten sind, und gegebenenfalls das oder die aufgetretenen Probleme oder Fehlfunktionen für die ermittelte Funktionsmodulkombination bestimmt.

In einem Ausgabeschritt 105 können die anhand der Nutzungsstatistik für die jeweilige Funktionsmodulkombination bestimmte Fehlerhäufigkeit - d.h. Anzahl der gesamten Installationen, Anzahl der Installationen mit Problem bzw. Fehlfunktion - sowie die auf Basis der Nutzungsstatistik ermittelte Fehlfunktion bzw. dass keine Fehlfunktion aufgetreten ist, ausgegeben werden. Die Ausgabe dieser Daten kann z.B. auf der Ausgabeeinheit AE der Zentraleinheit ZE erfolgen.

Weiterhin kann dem Betreiber OP im Ausgabeschritt 105 zumindest ein für den vorgegebenen Anwendungsfall AW installierbares Funktionsmodul Fx vorgeschlagen werden, welches in Kombination in den bereits am Feldgerät FG installierten Funktionsmodulen F1, F2, F3 die niedrigste Fehlerhäufigkeit oder keine Fehlfunktion - auf Basis der Abschätzung anhand der Nutzungsstatistik - aufweist.

In einem Installationsschritt 106 kann das für den Anwendungsfall vorgeschlagene Funktionsmodul Fx, beispielsweise das Funktionsmodul Fx mit der niedrigsten Fehlerhäufigkeit bzw. keiner Fehlfunktion, in Kombination mit den bereits installierten Funktionsmodulen F1, F2, F3 vom digitalen Archivsystem RS z.B. über das Kommunikationsnetz KN auf die Zentraleinheit ZE des Betreibers OP des Automatisierungssystems geladen werden. Von der Zentraleinheit ZE kann dieses Funktionsmodul Fx dann auf allen entsprechenden Feldgeräten FG z.B. remote installiert werden.

Für eine Rückmeldung über die Funktion der neu installierten Kombination aus Funktionsmodulen F1, F2, F3, Fx während des laufenden Betriebs können lokal auf den Feldgeräten FG Nutzungs- und Fehlfunktionsdaten als Metriken M gesammelt werden. Alternativ oder zusätzlich kann auch von der Zentraleinheit ZE eine Ausfallstatistik für die neu installierte Kombination von Funktionsmodulen F1, F2, F3, Fx geführt werden, welche ebenfalls in die Metriken M einfließen kann. Die Metriken M können dann beispielsweise anonymisiert von der Zentraleinheit ZE an das digitale Archivsystem RS übermittelt werden und für eine weitere Verbesserung bzw. einen weiteren Aufbau der in der Datenbank DB gespeicherten Nutzungsstatistik der installierten Funktionsmodulkombinationen oder lokal für eine manuelle Entscheidung zwischen mehreren vorgeschlagenen Funktionsmodulen Fx genutzt werden.

## Patentansprüche

1. Verfahren zur Kompatibilitätsprüfung von Funktionsmodulen (Fx), welche auf Feldgeräten (FG) eines Automatisierungssystems mittels einer Zentraleinheit (ZE) installierbar sind und welche für im Automatisierungssystem auftretende Anwendungsfälle (AW) von einem digitalen Archivsystem (RS) zur Verfügung gestellt werden, wobei den Funktionsmodulen (Fx) im digitalen Archivsystem (RS) Bewertungsdaten zugeordnet sind, und wobei vom digitalen Archivsystem (RS) die jeweils für einen vorgegebenen Anwendungsfall (SW) einsetzbaren Funktionsmodule (Fx) auf Basis der zugeordneten Bewertungsdaten für eine Installation auf einem Feldgerät (FG) vorgeschlagen werden können (102), ***dadurch gekennzeichnet, dass*** von der Zentraleinheit (ZE) neben dem vorgegebenen Anwendungsfall (AW) eine Dateninformation (H) über die auf dem Feldgerät (FG) installierten Funktionsmodule (F1, F2, F3) an das digitale Archivsystem (RS) übermittelt wird (101), dass vom digitalen Archivsystem (RS) auf Basis der Dateninformation (H) über die auf dem Feldgerät (FG) installierten Funktionsmodule (F1, F2, F3) Funktionsmodulkombinationen aus den auf dem Feldgerät (FG) installierten Funktionsmodulen (F1, F2, F3) und zumindest einem der jeweils vorgeschlagen Funktionsmodule (Fx) ermittelt werden (103), dass vom digitalen Archivsystem (RS) für die ermittelten Funktionsmodulkombinationen auf Basis einer gespeicherten Nutzungsstatistik eine Fehlerhäufigkeit der jeweils ermittelten Funktionsmodulkombination abgeschätzt wird (104), und dass für die Installation auf dem Feldgerät (FG) zumindest ein für den vorgegebenen Anwendungsfall (AW) installierbares Funktionsmodul (Fx) vorgeschlagen wird (105), welches in Kombination mit den am Feldgerät (FG) installierten Funktionsmodulen (F1, F2, F3) die niedrigste abgeschätzte Fehlerhäufigkeit aufweist.

2. Verfahren nach Anspruch 1, ***dadurch gekennzeichnet, dass*** vom digitalen Archivsystem (RS) die für die ermittelten Funktionsmodulkombinationen abgeschätzten Fehlerhäufigkeiten sowie auf Basis der gespeicherten Nutzungsstatistik ermittelte Fehlfunktion ausgegeben und angezeigt werden (105) .

3. Verfahren nach einem der Ansprüche 1 bis 2, ***dadurch gekennzeichnet, dass*** die Dateninformation (H) über die auf dem Feldgerät (FG) des Automatisierungssystems installierten Funktionsmodule (F1, F2, F3) in Form eines Hashwertes an das digitale Archivsystem (RS) übermittelt wird (101) .

4. Verfahren nach Anspruch 3, ***dadurch gekennzeichnet, dass*** als Hashfunktion zum Berechnen des Hashwertes der Dateninformation (H) über die auf dem Feldgerät (FG) des Automatisierungssystems installierten Funktionsmodule (F1, F2, F3) eine Hashfunktion verwendet wird (101), welche derart gestaltet ist, dass mit Hilfe von bekannten Hashwerten ein neuer Hashwert berechnet werden kann.

5. Verfahren nach einem der vorangegangen Ansprüche, ***dadurch gekennzeichnet, dass*** für die Nutzungsstatistik Nutzungs- und/oder Fehlfunktionsdaten von Funktionsmodulen (F1, F2, F3), welche auf Feldgeräten (FG) in verschiedenen Automatisierungssystem installiert sind, als Metriken (M) auf den Feldgeräten (FG) und/oder in der Zentraleinheit (ZE) des jeweiligen Automatisierungssystems gesammelt werden.

6. Verfahren nach Anspruch 5, ***dadurch gekennzeichnet, dass*** die gesammelten Metriken (M) von den jeweiligen Automatisierungssystemen für die Nutzungsstatistik anonymisiert an das digitale Archivsystem (RS) übertragen und ausgewertet werden.

7. Verfahren nach einem der vorangegangenen Ansprüche, ***dadurch gekennzeichnet, dass*** die Nutzungsstatistik im digitalen Archivsystem (RS) oder in einer Datenbank (DB), welche dem digitalen Archivsystem (RS) zugeordnet ist, gespeichert wird.

8. Verfahren nach einem der vorangegangenen Ansprüche, ***dadurch gekennzeichnet, dass*** die gespeicherte Nutzungsstatistik neben Funktionsmodulkombinationen, zumindest eine Anzahl der Installationen der jeweiligen Funktionsmodulkombinationen auf Feldgeräten (FG) sowie eine Anzahl an Installationen der jeweiligen Funktionsmodulkombinationen, durch welche eine Fehlfunktion verursacht wurden, umfasst.

## Claims

1. Method for checking the compatibility of function modules (Fx) that are able to be installed on field devices (FG) of an automation system by way of a central unit (ZE) and that are made available by a digital archive system (RS) for application cases (AW) occurring in the automation system, wherein rating data are assigned to the function modules (Fx) in the digital archive system (RS), and wherein the respective function modules (Fx) able to be used for a predefined application case (SW) are able to be suggested (102) by the digital archive system (RS) for installation on a field device (FG) based on the assigned rating data, **characterized in that,** in addition to the predefined application case (AW), data information (H) about the function modules (F1, F2, F3) installed on the field device (FG) is transmitted (101) to the digital archive system (RS) by the central unit (ZE), that function module combinations consisting of the function modules (F1, F2, F3) installed on the field device (FG) and at least one of the respectively suggested function modules (Fx) are ascertained (103) by the digital archive system (RS) based on the data information (H) about the function modules (F1, F2, F3) installed on the field device (FG), that an error frequency of the respectively ascertained function module combination is estimated (104) by the digital archive system (RS) for the ascertained function module combinations based on a stored usage statistic, and that at least one function module (Fx) able to be installed for the predefined application case (AW) is suggested (105) for the installation on the field device (FG), which function module has the lowest estimated error frequency in combination with the function modules (F1, F2, F3) installed on the field device (FG).

2. Method according to Claim 1, **characterized in that** the error frequencies estimated for the ascertained function module combinations and malfunction ascertained on the basis of the stored usage statistic are output and displayed (105) by the digital archive system (RS).

3. Method according to either of Claims 1 and 2, **characterized in that** the data information (H) about the function modules (F1, F2, F3) installed on the field device (FG) of the automation system is transmitted (101) to the digital archive system (RS) in the form of a hash value.

4. Method according to Claim 3, **characterized in that,** as hash function for computing the hash value of the data information (H) about the function modules (F1, F2, F3) installed on the field device (FG) of the automation system, use is made (101) of a hash function that is designed such that a new hash value is able to be computed using known hash values.

5. Method according to one of the preceding claims, **characterized in that,** for the usage statistic, usage data and/or malfunction data are collected from function modules (F1, F2, F3) that are installed on field devices (FG) in different automation systems, as metrics (M) on the field devices (FG) and/or in the central unit (ZE) of the respective automation system.

6. Method according to Claim 5, **characterized in that** the collected metrics (M) are transmitted from the respective automation systems to the digital archive system (RS) in anonymized form for the usage statistic and evaluated.

7. Method according to one of the preceding claims, **characterized in that** the usage statistic is stored in the digital archive system (RS) or in a database (DB) that is assigned to the digital archive system (RS).

8. Method according to one of the preceding claims, **characterized in that** the stored usage statistic, in addition to function module combinations, comprises at least a number of installations of the respective function module combinations on field devices (FG) and a number of installations of the respective function module combinations that caused a malfunction.

## Revendications

1. Procédé destiné à la vérification de la compatibilité de modules fonctionnels (Fx), qui peuvent être installés sur des appareils de terrain (FG) d'un système d'automatisation au moyen d'une unité centrale (ZE) et qui sont mis à disposition par un système d'archivage numérique (RS) pour des cas d'application (AW) survenant dans le système d'automatisation, dans lequel des données d'évaluation sont associées aux modules fonctionnels (Fx) dans le système d'archivage numérique (RS) et dans lequel par le système d'archivage numérique (RS) les modules fonctionnels (Fx) pouvant être mis en œuvre respectivement pour un cas d'application (SW) prédéfini peuvent être proposés sur la base des données d'évaluation associées pour une installation sur un appareil de terrain (FG), ***caractérisé* en ce que**, par l'unité centrale (ZE) outre le cas d'application (AW) prédéfini une information de données (H) est transmise au système d'archivage numérique (RS) par le biais des modules fonctionnels (F1, F2, F3) installés sur l'appareil de terrain (FG), **en ce que** par le système d'archivage numérique (RS) sur la base de l'information de données (H) par le biais des modules fonctionnels (F1, F2, F3) installés sur l'appareil de terrain (FG) des combinaisons de modules fonctionnels sont déterminées (103) à partir des modules fonctionnels (F1, F2, F3) installés sur l'appareil de terrain (FG) et au moins un des modules fonctionnels (Fx) proposés respectivement, **en ce que** par le système d'archivage numérique (RS) pour les combinaisons de modules fonctionnels déterminées sur la base d'une statistique d'utilisation enregistrée un taux d'erreur de la combinaison de modules fonctionnels déterminée respectivement est estimé (104), et **en ce que** pour l'installation sur l'appareil de terrain (FG) au moins un module fonctionnel (Fx) pouvant être installé pour le cas d'application (AW) prédéfini est proposé (105), qui présente en combinaison avec les modules fonctionnels (F1, F2, F3) installés au niveau de l'appareil de terrain (FG) le taux d'erreur estimé le plus bas.

2. Procédé selon la revendication 1, ***caractérisé* en ce que,** par le système d'archivage numérique (RS) les taux d'erreur estimés pour les combinaisons de modules fonctionnels déterminées ainsi que le dysfonctionnement déterminé sur la base de la statistique d'utilisation enregistrée sont émis et affichés.

3. Procédé selon l'une quelconque des revendications 1 à 2, ***caractérisé* en ce que** l'information de données (H) est transmise au système d'archivage numérique (RS) par le biais des modules fonctionnels (F1, F2, F3) installés sur l'appareil de terrain (FG) du système d'automatisation sous la forme d'une valeur de hachage.

4. Procédé selon la revendication 3, ***caractérisé* en ce que,** en tant que fonction de hachage permettant le calcul de la valeur de hachage de l'information de données (H) par le biais des modules fonctionnels (F1, F2, F3) installés sur l'appareil de terrain (FG) du système d'automatisation une fonction de hachage est utilisée (101), qui est configurée de telle sorte qu'une nouvelle valeur de hachage peut être calculée à l'aide de valeurs de hachage connues.

5. Procédé selon l'une quelconque des revendications précédentes, ***caractérisé* en ce que** pour la statistique d'utilisation des données d'utilisation et/ou de dysfonctionnement de modules fonctionnels (F1, F2, F3) qui sont installés sur des appareils de terrain (FG) dans différents systèmes d'automatisation, sont rassemblées en tant que métriques (M) sur les appareils de terrain (FG) et/ou dans l'unité centrale (ZE) du système d'automatisation respectif.

6. Procédé selon la revendication 5, ***caractérisé* en ce que** les métriques (M) rassemblées sont transférées et évaluées de manière anonyme par le système d'automatisation respectif pour la statistique d'utilisation au système d'archivage numérique (RS).

7. Procédé selon l'une quelconque des revendications précédentes, ***caractérisé en ce que*** la statistique d'utilisation est enregistrée dans le système d'archivage numérique (RS) ou dans une base de données (DB) qui est associée au système d'archivage numérique (RS).

8. Procédé selon l'une quelconque des revendications précédentes, ***caractérisé en ce que*** la statistique d'utilisation enregistrée outre des combinaisons de modules fonctionnels, comprend au moins une pluralité des installations des combinaisons de modules fonctionnels respectives sur des appareils de terrain (FG) ainsi qu'une pluralité d'installations des combinaisons de modules fonctionnels respectives par le biais desquelles un dysfonctionnement a été provoqué.
